# EUROPEAN PATENT APPLICATION

(11) **EP 1 513 171 A1**
(43) Date of publication of application: **09.03.2005**
(21) Application number: 03020202.2
(22) Date of filing: 05.09.2003
(51) Int. Cl.: H01G 9/20

(54) **Tandem dye-sensitised solar cell and method of its production**

(71) Applicant: Sony International (Europe) GmbH, 10785 Berlin (DE)
(72) Inventor: Dürr, Michael Stuttgart Technology Center, 70327Stuttgart (DE); Nelles, Gabriele Stuttgart Technology Center, 70327Stuttgart (DE); Yasuda, Akio Stuttgart Technology Center, 70327Stuttgart (DE)
(74) Representative: Appelt, Christian W.

(57) **Abstract**

The present invention relates to two-compartment or multi-compartment photovoltaic cells, their uses and methods of their production.

## Description

The present invention relates to two-compartment or multi-compartment photovoltaic cells, their uses and methods of their production.

Photoelectrochemical cells based on sensitization of nanocrystalline TiO₂ by molecular dyes (dye-sensitised solar cells, DSSC) have attracted great attention since their first announcement as efficient photovoltaic devices (B. O'Regan and M. Grätzel, Nature 353 (1991) 737; WO 91/16719 [A]). The main disadvantages of the state of the art DSSCs is, that the photo-active region of the commonly employed dye-sensitisers is limited mainly to the visible part of the solar spectrum, and with that, to the region of shorter wavelengths. However, the solar spectrum is broad and the low energy photons cannot be converted to electrical energy. One part of the investigations to increase the efficiency of this type of solar cell has therefore been the improvement of the absorption properties by the combination of different dyes in one cell. Random admixture of two or more dyes with different absorption spectra has not led to an improvement so far since the dyes used have always lower overall efficiency and mostly even lower peak efficiency than what the best dyes with broad absorption spectrum have shown so far, when used separately. As a consequence, combinations of these dyes also show lower overall efficiencies (e.g., Fang et al., Applied Surface Science 119, 237 (1997)). Furthermore, Y. Chiba, M. Shimizu, L. Han, R. Yamanaka, Photovaltaic cell and process for producing the same, US 2002/0134426, describe a two layer system, of which one layer has magnesium oxide on the surface and with the help of etching this surface layer, the dye molecules attached on the particles of this porous layer are removed together with the magnesium oxide layer and can be replaced by another type of dye molecules. Tatsuo Toyota, Yumiko Takeishi, Light to electricity conversion cell, JP 2000-243466A, describe a system, wherein dye molecules are mixed in TiO₂ paste and several layers of paste with different dye molecules, respectively, are applied by screen printing. He J, Lindstrom H, Hagfeldt A, Lindquist S-E, Dye-sensitized nanostructured tandem cell-first demonstrated cell with a dye-sensitized photocathode, Solar Energy Materials & Solar Cells, 62(3), 265 (2000), and Lindquist S-E, Hagfeldt A, Dye-sensitized nano-structured photovoltaic tandem cell. WO 99/63599 describe a cell based on two different semiconductors with different dyes attached. The first semiconductor electrode works as hole, the second as electron transporting material, the two potential differences between redox potential of electrolyte and the two (active) electrodes sum up to the photovoltage. Both semiconductor electrodes are combined in one single-compartment cell with one electrode working as cathode and the other electrode working as anode. Grätzel, Photoelectrochemical solar energy conversion by dye sensitisation, AIP CP404, 119 (1997), and M. Grätzel, J. Augustynski, Tandem cell for water cleavage by visible light, WO 01/02624 A1 describe a tandem cell consisting of one "normal" DSSC and one tungsten trioxide electrode without sensitizer to split water into hydrogen and oxygen. No direct conversion of photons to electricity is disclosed.

The shortcomings of the various approaches cited above are the following:

If two different dyes in one porous TiO₂ layer are applied by etching the first dye layer (Chiba et al., US 2002/0134426), the process is limited to special materials due to the etching involved and the processing is difficult since the use of several dyes precludes any sintering steps, once the first dye has been applied. If two different dyes are applied in one multi-layer TiO₂ film by subsequently screen printing TiO₂ pastes with different dye molecules admixed (Toyota et al., JP 2000-243466A), the process is limited to special materials (e.g., dye molecules, if high temperature has to be applied to the TiO₂/dye mixture), or the process is difficult if high temperature steps are to be avoided due to temperature sensitivity of, e. g. dye molecules. Using two different semiconducting electrodes with two different dyes attached (He et al., Solar Energy Materials & Solar Cells, 62/3), 265, (2000), WO 99/63599), the overall efficiency depends linearly on both conversion efficiencies of the dyes, respectively. This limits the overall efficiency to the lower efficiency and therefore no good results have been demonstrated yet.

Accordingly, it was an object of the present invention to provide for a dye-sensitised photovoltaic device, e.g. a solar cell, which has a higher efficiency in that it can make better use of the whole range of the spectrum of the light source used for irradiation.

Furthermore, it was an object of the present invention to provide for a photovoltaic device, e.g. a solar cell the production of which is easy and versatile to perform.

More specifically, it was an object of the present invention to provide for a photovoltaic device, e.g. a solar cell, during the production of which dyes are not damaged or decomposed by any heating steps.

Also it was an object of the present invention to provide for a solar cell which can be produced by a method which may include heat treatment steps, without running the risk of damaging any dyes which had already been applied to the cell prior to the heat-treatment.

It was furthermore an object of the present invention to provide for a photovoltaic device, e.g. a solar cell which allows to easily combine different properties of different materials in one cell. More particularly, it was an object of the present invention to allow for an efficient combination of two (or more) different dye molecules in one photovoltaic device, e.g. a solar cell.

Furthermore it was an object of the present invention to provide for a photovoltaic device, e.g. a solar cell which can also generate electricity from the absorption of low energy photons.

All these objects are solved by a photovoltaic device comprising at least two compartments, adjacent to each other, each of them being capable on its own of generating electricity when illuminated by light, each compartment comprising, in that order:
a) a transparent or semi-transparent substrate which is electrically conducting itself or a transparent or semi-transparent substrate made conducting through an additional conducting layer, e.g. a layer of transparent conducting oxide
c) a porous layer of semiconducting material, which porous layer further comprises a dye,
d) a charge-transporting agent, in contact with said porous layer of semiconducting material, said porous layer of semiconducting material having pores which may be at least partially filled by said charge-transporting agent,
e) a back electrode, which may be transparent, semi-transparent or non-transparent,
wherein
a first compartment of said at least two compartments comprises, in that order:
a) a first transparent or semi-transparent substrate, which is electrically conducting itself or which is made conducting through an additional first conducting layer, e. g. a layer of transparent conducting oxide,
c) a first porous layer of semiconducting material, which first porous layer further comprises a first dye,
d) a first charge-transporting agent, in contact with said first porous layer of semiconducting material, said first porous layer of semiconducting material having first pores which may be at least partially filled by said first charge-transporting agent,
e) a first back electrode, which is semi-transparent or transparent, and
wherein
a second compartment of said at least two compartments comprises, in that order:
a) a second transparent or semi-transparent substrate, which is electrically conducting itself or which is made conducting through an additional second conducting layer, e. g. a layer of transparent conducting oxide,
c) a second porous layer of semiconducting material, which second porous layer further comprises a second dye,
d) a second charge-transporting agent, in contact with said second porous layer of semiconducting material, said second porous layer of semiconducting material having second pores which may be at least partially filled by said second charge-transporting agent,
e) a second back electrode, which is transparent, semi-transparent or non-transparent, e. g. reflective, and
f) optionally, a third substrate,
and wherein said at least two compartments make contact to each other between said first back electrode and said second transparent substrate, either directly or through an intermittent material, preferably arranged in a layer, which intermittent material layer has the same refractive index as the first and/or second transparent or semi-transparent substrate.

In one embodiment, said intermittent material layer has a similar refractive index as the first and/or second transparent or semi-transparent substrate. The term "similar refractive index", as used herein, is meant to designate a difference in refractive index between said intermittent material layer and said first or second substrate not greater than 10%, preferably not greater than 5%, more preferably not greater than 2%, most preferably not greater than 1%, when taking the refractive index of said intermittent material layer as 100% reference.

In one embodiment, said first back-electrode is mounted on an additional transparent or semi-transparent substrate, which is distinct from the first and second substrate which additional substrate is mounted on said second substrate of said second compartment, wherein, preferably, said additional substrate is mounted on said second substrate via said aforementioned intermittent material layer. In another embodiment, said first back-electrode is mounted directly on said second substrate of said second compartment, preferably without any additional substrate and/or without any intermittent material layer.

In one embodiment, one or both of said at least two compartments additionally comprise
b) a layer of semiconducting material between said transparent substrate and said porous layer, said semiconducting material being the same as in c) or a different semiconducting material, wherein, preferably, said layer of said semiconducting material b) has fewer pores than said porous layer of semiconducting material c), or, wherein said layer of said semiconducting material b) has no pores.

In one embodiment, said layer of semiconducting material b) acts as a blocking layer between a) and d).

In one embodiment, said first dye has an absorption spectrum with a first maximum at λₘₐₓ₁, and said second dye has an absorption spectrum with a second maximum at λₘₐₓ₂, with λₘₐₓ₁ < λₘₐₓ₂.

If said first and/or second dye have no pronounced maximum, in one embodiment said first dye has a centre of mass of the sepctrum, λ_{CM,1}, which is smaller than the maximum λₘₐₓ₂ of the second dye or smaller than the centre of mass of the spectrum of the second dye, λ_{CM,2}, or λₘₐₓ₁ is smaller than λ_{CM,2}.

Preferably, said first and/or said second porous layer of semiconducting material is comprised of particles of semiconducting material, and said first and/or said second dye is attached to said particles of semiconducting material, preferably at the surface of said particles.

In one embodiment, a) is in contact with c) which is in contact with d) which is in contact with e), which is optionally in contact with f).

In another embodiment, a) is in contact with b) which is in contact with c) which is in contact with d) which is in contact with e), which is optionally in contact with f).

In one embodiment, there is one or more additional intermittent layers between a) and b), a) and c), b) and c), c) and d), d) and e), and/or e) and f).

In one embodiment, said first and/or said second transparent substrate is a transparent oxide substrate, e. g. FTO, ITO, ZnO, SnO₂, and combinations thereof, on glass.

In one embodiment, said first and/or said second back electrode is not photoactive.

Preferably, each of said at least two compartments comprises one porous layer of semiconducting material (c)) only, wherein, more preferably, said porous layer of semiconducting material does not have a multi-layer structure.

In another embodiment, said first or said second porous layer of semiconducting material or both layers of semiconducting material comprise a multi-layer structure.

Preferably, said first porous layer of semiconducting material c) is transparent.

In one embodiment, said second porous layer of semiconducting material c) is scattering, i. e. less transparent than said first porous layer.

In one embodiment, said first and said second charge-transporting agents are the same or different.

Preferably, the charge-transporting agent is liquid, solid or quasi-solid, wherein, preferably, if the charge-transporting agent is quasi-solid, it is a gel, preferably a polymer-gel.

In one embodiment, the charge-transporting agent is an electrolyte.

In one embodiment, the charge-transporting agent forms a layer adjacent to the porous layer of semiconducting material, which layer of charge-transporting agent is in intimate contact with said porous layer of semiconducting material such that it partially or fully penetrates said porous layer of semiconducting material.

In one embodiment, the charge-transporting agent contains a redox couple, of which redox couple the reducing species is capable of regenerating the dye, comprised in c).

Preferably, the first back electrode and/or the second back electrode is a metal layer, e. g. a platinum layer.

In one embodiment, the first back electrode has a transmittance of ≥ 80%.

Preferably, there is a layer of conducting material between said first back electrode and the substrate, which it is mounted on. The latter may be either the second substrate or said additional substrate. In one embodiment there is, additionally or alternatively to the aforementioned embodiment, a layer of conducting material between said second back electrode and said third substrate, or between said second back electrode and an additional substrate which is underneath the second back electrode, provided there is such an additional substrate that is distinct from said third substrate and is positioned between said second back electrode and said third substrate.

In one embodiment, said metal layer, e. g. layer of platinum is a continuous layer, or it is an arrangement of several metal strips, e. g. platinum strips, wherein, preferably, if the metal layer is an arrangement of metal strips, the metal strips are arranged in a parallel or meandering pattern.

In one embodiment, if the metal layer is arranged in metal strips, and wherein adjacent strips are separated by a distance b, and wherein the strips have a width a, the ratio b:a is preferably ≥ 4.

In one embodiment the metal layer is a semitransparent layer, which semitransparent layer is preferably a platinum layer, preferably with a thickness below 10 nm, more preferably below 5 nm.

In one embodiment, the second back electrode is reflective and/or scattering.

In that case, said second compartment having a reflective second back electrode forms the compartment furthest away from a light source used for illumination of the photovoltaic device.

This is preferably the case, if the photovoltaic device according to the present invention only comprises two compartments.

In one embodiment, said porous layer of semiconducting material comprises an oxide, such as TiO₂, SnO₂, ZnO, Nb₂O₅, ZrO₂, CeO₂, WO₃, SiO₂, Al₂O₃, CuAlO₂, SrTiO₃ and SrCu₂O₂, or a complex oxide containing several of these oxides.

Preferably, said first compartment and said second compartment are connected either in parallel or in series.

In one embodiment, said photovoltaic device comprises one or several compartments of the first compartment type, and further comprises one or several compartments of the second compartment type, wherein preferably all or some compartments of the second compartment type have a non-transparent, e. g. reflective or scattering, second back electrode.

In one embodiment, the one or several compartments of the first compartment type form a first module, and wherein the one or several compartments of the second compartment type form a second module, which first module contains a different number of compartments of the first compartment type than the second module contains compartments of the second compartment type.

In one embodiment, said first module is arranged adjacent or on top of said second module.

In one embodiment, the photovoltaic device according to the present invention comprises a third compartment, being capable on its own of generating electricity, when illuminated by light, wherein said third compartment comprises in that order:
a) a third transparent or semi-transparent substrate which is electrically conducting itself or which is made conducting through an additional third conducting layer, e.g. a layer of transparent conducting oxide
c) a third porous layer of semiconducting material, which third porous layer further comprises a third dye,
d) a third charge-transporting agent, in contact with said third porous layer of semiconducting material, said third porous layer of semiconducting material having third pores which may be at least partially filled by said third charge-transporting agent,
e) a third back electrode, which is transparent , semi-transparent, or non-transparent, e.g. reflective or scattering.

Preferably, said third back electrode is non-transparent, e.g. reflective or scattering, if the photovoltaic device according to the present invention only comprises three compartments, and the third compartment is arranged underneath said first and said second compartment and is intended to be furthest away from a source of radiation, used for illumination of the photovoltaic device.

In one embodiment, said photovoltaic device comprises additional compartments, each comprises, in that order, a) a transparent or semi-transparent substrate as described in claim 1, c) a porous layer of semiconducting material, as described in claim 1, d) a charge-transporting agent, as described in claim 1, and e) a back electrode, as described for the second back electrode in claim 1, which additional compartments are arranged underneath the previous compartments, with the (n + 1 )th-compartment being underneath the n-th compartment, wherein, preferably, the compartment with the greatest n, nₘₐₓ, optionally comprises f) an (nₘₐₓ + 1)th-substrate, in addition to its a) nₘₐₓth-substrate. In one embodiment, some or all of said additional compartments also comprise b) a layer of semiconducting material, as described in claim 2.

Preferably, the nₘₐₓ th back electrode is non-transparent, e.g. reflective or scattering.

Preferably, the n-th back electrode, except for the nₘₐₓ th back electrode is transparent or semi-transparent.

The objects of the present invention are also solved by the use of the photovoltaic device for generating electricity from light.

The objects of the present invention are also solved by a method of producing a photovoltaic device according to the present invention providing, in that order
a) a first transparent or semi-transparent substrate, which is electrically conducting itself or which is made conducting through an additional first conducting layer, e. g. a layer of transparent conducting oxide,
   applying thereon,
c) a first porous layer of semiconducting material, and
   sintering said first porous layer of semiconducting material,
   applying thereon a first dye by soaking, immersing, imbibing etc.
   applying on said first porous layer of semiconducting material
d) a first charge-transporting agent, such that it comes in contact with said first porous layer of semiconducting material, said first porous layer of semiconducting material having first pores which may be at least partially filled by said first charge-transporting agent,
   applying thereon
e) a first back electrode, which is semi-transparent or transparent,
   furthermore providing

a) a second transparent or semi-transparent substrate, which is electrically conducting itself or which is made conducting through an additional second conducting layer, e. g. a layer of transparent conducting oxide,
   applying thereon
c) a second porous layer of semiconducting material, and sintering said second porous layer of semiconducting material, applying thereon a second dye by soaking, immersing, imbibing etc.,
   applying on said second porous layer of semiconducting material
d) a second charge-transporting agent, such that it comes in contact with said second porous layer of semiconducting material, said second porous layer of semiconducting material having second pores which may be at least partially filled by said second charge-transporting agent,
   applying thereon
e) a second back electrode, which is transparent, semi-transparent or non-transparent, e. g. reflective, and, optionally,
   applying thereon
f) a substrate, furthermore
   combining said first and said second compartment, such that said first back electrode comes into contact with said second transparent or semi-transparent substrate, either directly or through an intermittent material, preferably arranged in a layer, which intermittent material has the same or similar refractive index as said first and/or said second substrate, furthermore
   connecting said first and said second compartment either in parallel or in series.

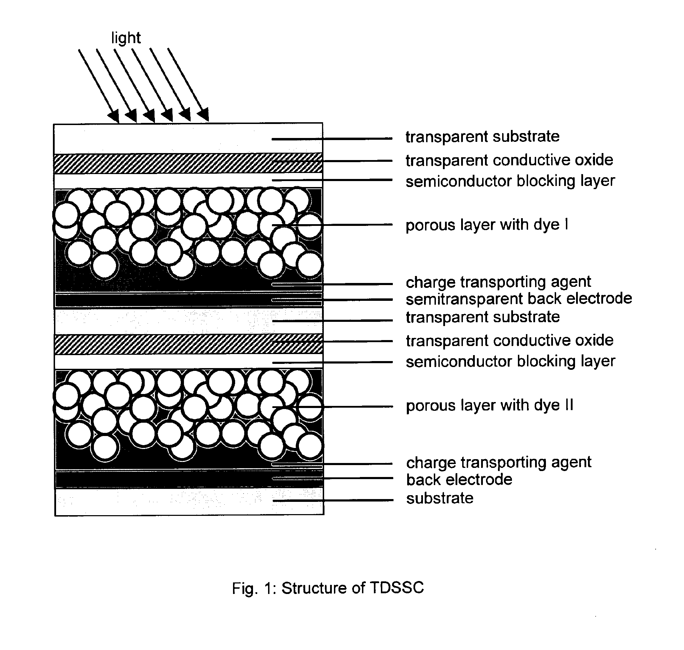

According to the present invention, the disadvantages listed above can be overcome by the design of a tandem dye-sensitised solar cell (TDSSC) consisting of two separated cell compartments (Fig. 1). In the first compartment, a porous semiconductor layer is attached to a conducting substrate, preferably a conducting transparent oxide substrate either directly or via a thin bulk semiconductor blocking-layer. Dye molecules with a defined absorption spectrum are included in the porous semiconducting layer. Preferably, they are attached on the surface of the nano-porous semiconductor particles. A part of the incoming light is absorbed by the dye molecules and the excited electron is injected into the semiconductor. The whole layer is fully or partially penetrated in its pores by a charge-transporting agent. Electrons from the back electrode may be transported in any form from the back electrode to the semiconductor electrode to regenerate the dye ions after excitation and electron injection into the semiconducting material. The electrical circuit can be closed by an external load between the conductive transparent oxide and the back electrode. The back electrode has most likely a metal surface. In this special application, it has to be transparent or at least semitransparent. At the back of the back electrode, a second compartment is connected to the first compartment. It has a similar structure as the first compartment but the dye molecules attached to the porous layer have a different absorption spectrum than the dye molecules in the first compartment. Therefore the photons transmitted by the first compartment may be absorbed by the dye attached to the porous layer in the second compartment. The back electrode can be reflective in the second compartment. It is clear that the number of compartments is not limited to two. There may be three or more compartments, and they differ from each other in that the dye in the first compartment has different absorption characteristics to the dye in the second compartment which, in turn, has different absorption characteristic to the dye in the third compartment, with λₘₐₓ₁ < λₘₐₓ₂ < λ_{max3,} λₘₐₓₙ being the wavelength of the absorption maximum of the n^{th} compartment. If one or several of the dyes do not have pronounced maxima but centres of mass of the spectrum (spectra), λ_{CM;1}, λ_{CM,2}, λ_{CM,3}, with λ_{CM,n} being the centre of mass of the spectrum in the n^{th} compartment, it is preferred that the following relation applies: λ_{CM;1} < λ_{CM,2} < λ_{CM,3}. For the purpose of describing the present invention, the photovoltaic device comprises nₘₐₓ compartments, with the (n + 1)th compartment being further away from a source of radiation, used for illumination of the device, than the n-th compartment, and the first compartment is closest to a source of radiation, and the nₘₐₓ th compartment is furthest away from a source of radiation.

For some applications, λₘₐₓₙ = λₘₐₓ₍ₙ₊₁₎, or λ_{CM;n} = λ_{CM(n+1)} may be of advantage as well. Accordingly, in one embodiment λₘₐₓₙ = Xₘₐₓₙ₊₁ ,or λ_{CM,n} = λ_{CM,n+1}, and combinations thereof, i. e. λₘₐₓₙ = λ_{cm,n+1} etc.

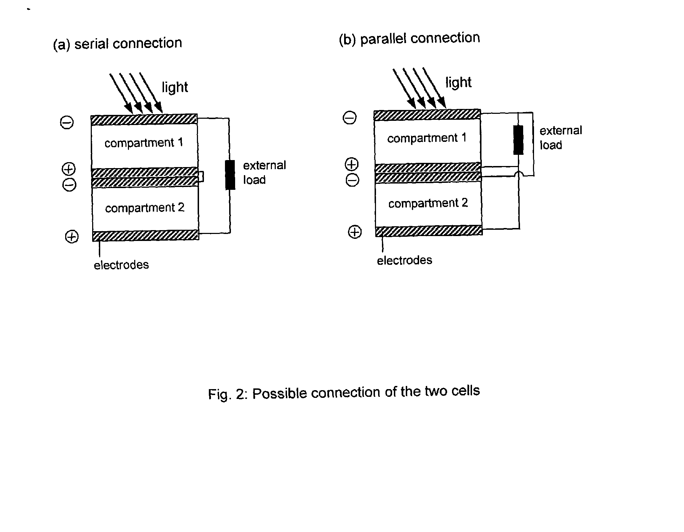

The first and the second compartment may be connected either in parallel or in series (Fig. 2). To adjust the photovoltages of the first and second compartment (in case they are connected in parallel and the two photovoltages are too different), a multi-module design with one module comprising the upper compartments and/or one module comprising the lower compartments but a different number of cells in the upper and lower module is possible.
To adjust the photocurrents of the first and the second cell compartment (in case they are connected in series and the two photocurrents are too different), a multi-module design with one module comprising the upper compartments and/or one module comprising the lower compartments but a different number of cells in the upper and lower module is possible.
Any other sort of modules comprising the upper and lower cell compartments can be assembled to adjust to a desired voltage or current.

As used herein, a "photoactive electrode" is an electrode which receives a charge injection from a dye associated with that electrode. Such a "photoactive electrode" usually comprises a porous layer of semiconducting material.

The term "semi-transparent", as used herein, when applied to a layer, a substrate etc., is meant to designate a state wherein the layer, the substrate etc. has a transmittance of visible light of ≥ 30%, preferably ≥ 70%, more preferably ≥ 80%, most preferably ≥ 90%.

The term "not having a multi-layer structure", when applied to a porous layer of semiconducting material, is meant to designate the fact, that within that porous layer of semiconducting material no sub-layers can be distinguished.

Two layers of any kind are said to be "in contact" with each other, if they either physically contact each other directly or they are connected to each other in a conducting manner, or they are connected to each other via an intermittent layer.

A "multi-layer structure" is a structure, wherein separate layers can be distinguished by having different structural features, e. g. color, absorption, pore size, particle size, particle shape such that the resulting structure have several layers on top of each others.

In the method of production of the photovoltaic cell according to the present invention, a series of techniques may be used for applying the different layers which are well known to someone skilled in the art. These techniques include spin coating, doctor blading, screen printing, drop casting, lift-off techniques, sol-gel process, and any combination thereof, without being limited thereto.

The subsequent sintering step, which serves the purpose of making the layer of semiconducting material highly porous, is preferably carried out at a temperature in the range of from 100°C - 500°C, preferably from 200°C to 450°C, more preferably from 350°C to 450°C.

Reference is now made to the figures, wherein
Figure 1 shows an exemplary structure of a tandem dye-sensitised solar cell (TDSSC) according to the present invention,
Figure 2 shows the way in which two exemplary compartments may be connected within a photovoltaic device according to the present invention,

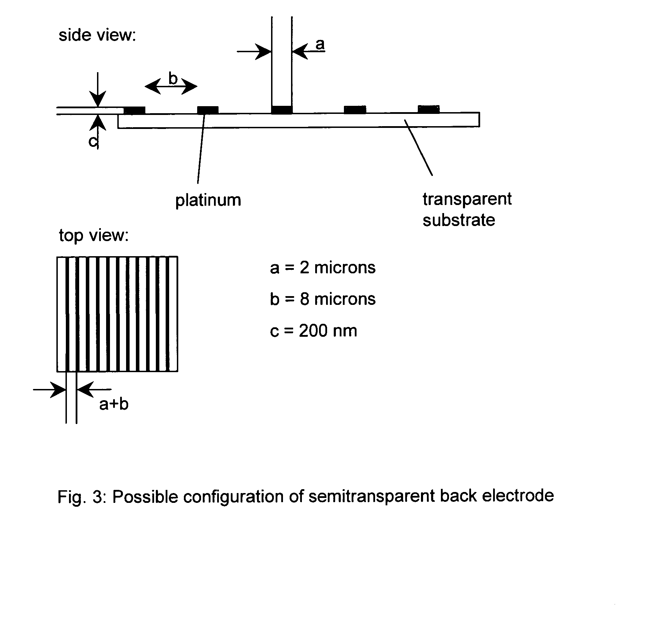

Figure 3 shows an example for the configuration of a semi-transparent back electrode ,
Figure 4 shows I-V- and η-V- characteristics of a first compartment and a second compartment of a photovoltaic cell according to the present invention, together with the I-V- and η-V-characteristics of a tandem dye-sensitised solar cell according to the present invention , measured at 100 mW/cm², standardised to air mass 1.5 (AM 1.5).

The invention will now be further described by the following example which is given to illustrate, not to limit the invention.

A prototype TDSSC is assembled as follows: For the first compartment, a 30 nm thick bulk TiO₂ blocking layer is formed on FTO (approx. 100 nm on glass, 20 Ohm per square). A 10 micron thick porous layer of particles of 14 nm diameter in average is screen printed on the blocking layer and sintered at 450 degree for half an hour. Red dye N3 is adsorbed to the particles via self-assembling out of a solution in ethanol (0,3 mM) and the porous layer is filled with electrolyte containing I⁻/I₃⁻ as redox couple (15 mM). A semitransparent back electrode consisting of 2 nm platinum sputtered on FTO (approx. 100 nm on glass, 20 Ohm per square) is attached with a distance of 6 microns from the porous layer.

For the second compartment, a 30 nm thick bulk TiO₂ blocking layer is formed on FTO (approx. 100 nm on glass, 20 Ohm per square).. A 10 micron thick porous layer consisting of 80 wt% particles of 20 nm in diameter in average and 20 wt% particles of 300 nm diameter in average is screen printed on the blocking layer and sintered at 450 degrees for half an hour. Black dye molecules (Ruthenium 620) are adsorbed to the particles via self-assembling out of a solution in ethanol (0.3 mM) and the porous layer is filled with electrolyte containing I⁻/I₃⁻ (15 mM) as redox couple. A reflective platinum back electrode is attached with a distance of 6 microns from the porous layer.

The two compartments are mounted together using a liquid which has the same refractive index as the glass substrates have.

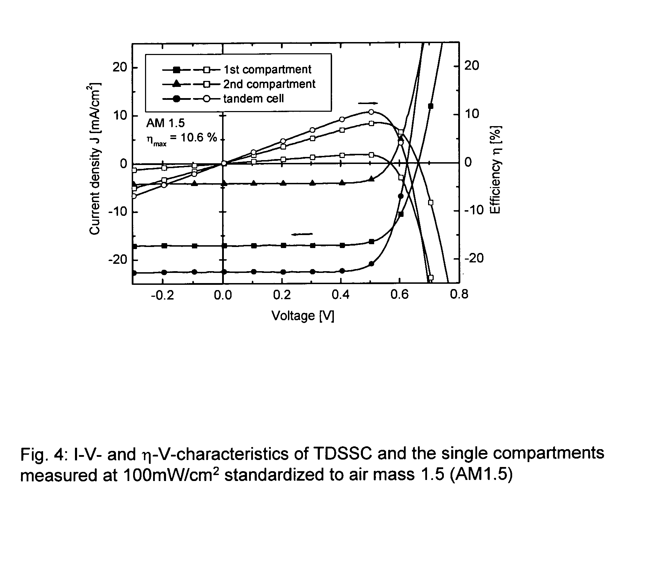

The I-V-characteristics as well as the efficiency η as a function of voltage of a prototype TDSSC are shown in Figure 4. Light intensity of the simulated solar irradiation (AM 1.5) was 100 mW/cm², the irradiated area of the TDSSC was 0,09 cm². Most remarkably, the short circuit current densities of the two single compartments add to J_{sc} = 22.4 mA/cm² in the TDSSC, a value higher than what has been reported so far for single compartment DSSCs measured under comparable conditions. The maximum power conversion efficiency of this TDSSC can be determined to be η = 10.6%, comparable to the best values reported in the literature. A further optimization is expected to yield values for a TDSSC which even surpass the best values of single compartment DSSCs.

The main advantageous difference of the invention to the earlier listed types of design (see above) is the combination of two separated compartments comprising two DSSCs with different absorption properties. This leads to highest short circuit currents (see above) while the manufacturing of the cells remains simple. Optimization will lead to highest power conversion efficiencies as well.

The features of the present invention disclosed in the specification, the claims and/or in the accompanying drawings, may, both separately, and in any combination thereof, be material for realising the invention in various forms thereof.

## Claims

1. A photovoltaic device comprising at least two compartments, adjacent to each other, each of them being capable on its own of generating electricity when illuminated by light, each compartment comprising, in that order:
a) a transparent or semi-transparent substrate which is electrically conducting itself or a transparent or semi-transparent substrate made conducting through an additional conducting layer, e.g. a layer of transparent conducting oxide
c) a porous layer of semiconducting material, which porous layer further comprises a dye,
d) a charge-transporting agent, in contact with said porous layer of semiconducting material, said porous layer of semiconducting material having pores which may be at least partially filled by said charge-transporting agent,
e) a back electrode, which may be transparent, semi-transparent or non-transparent,
wherein
a first compartment of said at least two compartments comprises, in that order:
a) a first transparent or semi-transparent substrate, which is electrically conducting itself or which is made conducting through an additional first conducting layer, e. g. a layer of transparent conducting oxide,
c) a first porous layer of semiconducting material, which first porous layer further comprises a first dye,
d) a first charge-transporting agent, in contact with said first porous layer of semiconducting material, said first porous layer of semiconducting material having first pores which may be at least partially filled by said first charge-transporting agent,
e) a first back electrode, which is semi-transparent or transparent, and
wherein
a second compartment of said at least two compartments comprises, in that order:
a) a second transparent or semi-transparent substrate, which is electrically conducting itself or which is made conducting through an additional second conducting layer, e. g. a layer of transparent conducting oxide,
c) a second porous layer of semiconducting material, which second porous layer further comprises a second dye,
d) a second charge-transporting agent, in contact with said second porous layer of semiconducting material, said second porous layer of semiconducting material having second pores which may be at least partially filled by said second charge-transporting agent,
e) a second back electrode, which is transparent, semi-transparent or non-transparent, e. g. reflective, and
f) optionally, a third substrate,
and wherein said at least two compartments make contact to each other between said first back electrode and said second transparent substrate, either directly or through an intermittent material, preferably arranged in a layer, which intermittent material layer has the same refractive index as the first and/or second transparent substrate.

2. The photovoltaic device according to claim 1, wherein one or both of said at least two compartments additionally comprise
b) a layer of semiconducting material between said transparent substrate and said porous layer, said semiconducting material being the same as in c) or a different semiconducting material.

3. The photovoltaic device according to any of the foregoing claims, wherein said first back-electrode is mounted on an additional transparent or semi-transparent substrate, which is distinct from the first and second substrate which additional substrate is mounted on said second substrate of said second compartment.

4. The photovoltaic device according to claim 3, wherein said additional substrate is mounted on said second substrate via said intermittent material layer.

5. The photovoltaic device according to any of claims 1 and 2, wherein said first back-electrode is mounted directly on said second substrate of said second compartment, preferably without any additional substrate and/or without any intermittent material layer.

6. The photovoltaic device according to any of claims 2-5, wherein said layer of said semiconducting material b) has fewer pores than said porous layer of semiconducting material c) or has no pores.

7. The photovoltaic device according to any of claims 1 - 6, wherein said first dye has an absorption spectrum with a first maximum at λₘₐₓ₁, and said second dye has an absorption spectrum with a second maximum at λₘₐₓ₂, with λₘₐₓ₁ < λₘₐₓ₂.

8. The photovoltaic device according to any of the foregoing claims, wherein said first and/or said second porous layer of semiconducting material is comprised of particles of semiconducting material, and said first and/or said second dye is attached to said particles of semiconducting material, preferably at the surface of said particles.

9. The photovoltaic device according to any of the foregoing claims, wherein when dependent on claim 1, but not on claim 2, a) is in contact with c) which is in contact with d) which is in contact with e), which is optionally in contact with f).

10. The photovoltaic device according to any of claims 1 - 8, wherein, when dependent on claim 2, a) is in contact with b) which is in contact with c) which is in contact with d) which is in contact with e), which is optionally in contact with f).

11. The photovoltaic device according to any of the foregoing claims, wherein there is one or more additional intermittent layers between a) and b), a) and c), b) and c), c) and d), d) and e), and/or e) and f).

12. The photovoltaic device according to any of the foregoing claims, wherein said first and/or said second back electrode is not photoactive.

13. The photovoltaic device according to any of the foregoing claims, wherein each of said at least two compartments comprises one porous layer of semiconducting material (c)) only.

14. The photovoltaic device according to any of the foregoing claims, wherein said first and/or said second transparent substrate is a transparent oxide substrate, e. g. FTO, ITO, ZnO, SnO₂, and combinations thereof, on glass.

15. The photovoltaic device according to any of the foregoing claims, wherein said first porous layer of semiconducting material c) is transparent.

16. The photovoltaic device according to any of the foregoing claims, wherein said second porous layer of semiconducting material c) is scattering, i. e. less transparent than said first porous layer.

17. The photovoltaic device according to any of the foregoing claims, wherein said first and said second charge-transporting agents are the same or different.

18. The photovoltaic device according to any of the foregoing claims, wherein the charge-transporting agent is liquid, solid or quasi-solid.

19. The photovoltaic device according to claim 18, wherein, if the charge-transporting agent is quasi-solid, it is a gel, preferably a polymer-gel.

20. The photovoltaic device according to any of the foregoing claims, wherein the charge-transporting agent is an electrolyte.

21. The photovoltaic device according to any of the foregoing claims, wherein the charge-transporting agent forms a layer adjacent to the porous layer of semiconducting material, which layer of charge-transporting agent is in intimate contact with said porous layer of semiconducting material such that it partially penetrates said porous layer of semiconducting material.

22. The photovoltaic device according to any of the foregoing claims, **characterized in that** the charge-transporting agent contains a redox couple, of which redox couple the reducing species is capable of regenerating the dye, comprised in c).

23. The photovoltaic device according to any of the foregoing claims, wherein the first back electrode and/or the second back electrode is a metal layer, e. g. a platinum layer.

24. The photovoltaic device according to claim 23, wherein the first electrode has a transmittance of ≥ 80%.

25. The photovoltaic device according to any of the foregoing claims, wherein there is a layer of conducting material between said first back electrode and the substrate which it is mounted on, which substrate may be said second substrate or said additional substrate according to claim 3.

26. The photovoltaic device according to any of the foregoing claims, where there is a layer of conducting material between said second back electrode and said third substrate, or between said second back electrode and an additional substrate which is underneath said second back electrode, provided there is an additional substrate that is distinct from said third substrate and is positioned between said second back electrode and said third substrate.

27. The photovoltaic device according to any of claims 23 -26, wherein said metal layer, e. g. platinum layer, is a continuous layer, or it is an arrangement of several metal strips, e. g. platinum strips.

28. The photovoltaic device according to claim 27, wherein, if said metal layer is an arrangement of metal strips, the metal strips are arranged in a parallel or meandering pattern.

29. The photovoltaic device according to any of claims 27 - 28, wherein, if said metal layer is arranged in metal strips, and wherein adjacent strips are separated by a distance b, and wherein the strips have a width a, the ratio b:a is ≥ 4.

30. The photovoltaic device according to any of the foregoing claims, wherein said second back electrode is reflective and/or scattering.

31. The photovoltaic device according to claim 30, wherein said second compartment, having a reflective second back electrode forms the compartment furthest away from a light source used for illumination of the photovoltaic device.

32. The photovoltaic device according to any of the foregoing claims, wherein said porous layer of semiconducting material comprises an oxide, such as TiO₂, SnO₂, ZnO, Nb₂O₅, ZrO₂, CeO₂, WO₃, SiO₂, Al₂O₃, CuAlO₂, SrTiO₃ and SrCu₂O₂, or a complex oxide containing several of these oxides.

33. The photovoltaic device according to any of the foregoing claims, wherein said first compartment and said second compartment are connected either in parallel or in series.

34. The photovoltaic device according to any of the foregoing claims, wherein said photovoltaic device comprises one or several compartments of the first compartment type, and further comprises one or several compartments of the second compartment type.

35. The photovoltaic device according to claim 34, wherein the one or several compartments of the first compartment type form a first module, and wherein the one or several compartments of the second compartment type form a second module, which first module contains a different number of compartments of the first compartment type than the second module contains compartments of the second compartment type.

36. The photovoltaic device according to claim 35, wherein said first module is arranged adjacent or on top of said second module.

37. The photovoltaic device according to any of the foregoing claims, wherein it comprises a third compartment, being capable on its own of generating electricity, when illuminated by light, wherein said third compartment comprises in that order:
a) a third transparent or semi-transparent substrate which is electrically conducting itself or which is made conducting through an additional third conducting layer, e.g. a layer of transparent conducting oxide
c) a third porous layer of semiconducting material, which third porous layer further comprises a third dye,
d) a third charge-transporting agent, in contact with said third porous layer of semiconducting material, said third porous layer of semiconducting material having third pores which may be at least partially filled by said third charge-transporting agent,
e) a third back electrode, which is transparent, semi-transparent or non-transparent, e.g. reflective or scattering.

38. The photovoltaic device according to claim 37, only comprising three compartments, wherein said third compartment is arranged underneath said first and said second compartment and is intended to be furthest away from a source of radiation used for illumination of the photovoltaic device.

39. The photovoltaic device according to any of the foregoing claims, wherein said photovoltaic device comprises additional compartments, each comprising, in that order, a) a transparent substrate as described in claim 1, c) a porous layer of semiconducting material, as described in claim 1, d) a charge-transporting agent, as described in claim 1, and e) a back electrode, as described in claim 1, which additional compartments are arranged underneath the previous compartments, with the (n + 1)th compartment being underneath the n-th compartment.

40. Use of a photovoltaic device according to any of claims 1 - 39, for generating electricity from light.

41. A method of producing a photovoltaic device according to any of claims 1 - 40, providing, in that order
a) a first transparent or semi-transparent substrate, which is electrically conducting itself or which is made conducting through an additional first conducting layer, e. g. a layer of transparent conducting oxide,
applying thereon,
c) a first porous layer of semiconducting material, and
sintering said first porous layer of semiconducting material,
applying thereon a first dye by soaking, immersing, imbibing etc.
applying on said first porous layer of semiconducting material
d) a first charge-transporting agent, such that it comes in contact with said first porous layer of semiconducting material, said first porous layer of semiconducting material having first pores which may be at least partially filled by said first charge-transporting agent,
applying thereon
e) a first back electrode, which is semi-transparent or transparent,
furthermore providing
a) a second transparent or semi-transparent substrate, which is electrically conducting itself or which is made conducting through an additional second conducting layer, e. g. a layer of transparent conducting oxide,
applying thereon
c) a second porous layer of semiconducting material, and
sintering said second porous layer of semiconducting material,
applying thereon a second dye by soaking, immersing, imbibing etc.,
applying on said second porous layer of semiconducting material
d) a second charge-transporting agent, such that it comes in contact with said second porous layer of semiconducting material, said second porous layer of semiconducting material having second pores which may be at least partially filled by said second charge-transporting agent,
applying thereon
e) a second back electrode, which is transparent, semi-transparent or non-transparent, e. g. reflective, and, optionally,
applying thereon
f) a substrate, furthermore
combining said first and said second compartment, such that said first back electrode comes into contact with said second transparent or semi-transparent substrate, either directly or through an intermittent material, preferably arranged in a layer, which intermittent material has the same or similar refractive index as said first and/or said second substrate, furthermore
connecting said first and said second compartment either in parallel or in series.
